# FASCICULE DE BREVET EUROPEEN

(11) **EP 0 628 112 B1**
(45) Date de publication et mention de la délivrance du brevet: **08.01.1997**
(21) Numéro de dépôt: 94902816.1
(22) Date de dépôt: 15.12.1993
(51) Int. Cl.: E01F 13/00, E01F 9/011, H02G 3/18, H02B 1/50

(54) **Borne électrique escamotable**
Versenkbare elektrische Sperre
Retractable electric terminal

(30) Priorité: 23.12.1992 FR 9215754
(43) Date de publication de la demande: 14.12.1994
(73) Titulaire: URBACO (S.A.R.L.), F-84270 Vedène (FR)
(72) Inventeur: VERRA, Yvan, F-84310 Morières-les-Avignon (FR)
(74) Mandataire: Bugnon-Hays, Claudine
(86) Numéro de dépôt international: FR9301250
(87) Numéro de publication internationale: WO9415027

(56) Documents cités:
- WO-A-80/02576
- WO-A-92/02683
- WO-A-93/14272
- DE-A- 2 356 609
- DE-A- 3 620 349
- DE-C- 675 894
- DE-C- 1 044 921
- DE-U- 7 540 375
- FR-A- 1 023 189
- FR-A- 2 596 782

## Description

La présente invention concerne une borne escamotable dans le sol et plus particulièrement, une borne de voirie.

Des bornes de ce type sont connues et comportent un corps de borne mobile apte à se déplacer dans un logement sensiblement correspondant ou caisson, ouvert à son extrémité supérieure, entre une position de service dans laquelle ledit corps s'étend fixement au-dessus du niveau de l'extrémité ouverte du logement et une position de repos dans laquelle ledit corps s'étend par son sommet sensiblement au niveau de l'extrémité ouverte du logement.

Il est également connu par la demande de brevet FR-A-2 596 782 déposée par la demanderesse, de pourvoir une telle borne de moyens de commande, à distance ou non, constitués par exemple par un vérin pneumatique à simple effet dont le cylindre est relié par un conduit d'alimentation à une source d'un fluide sous pression.

Sont également connues des bornes plus simples fonctionnant uniquement à l'aide de moyens mécaniques commandés par intervention manuelle seulement.

Dans tous les cas de figures précités, ces bornes escamotables ont pour rôle de permettre ou d'interdire un accès par exemple d'un passage ou d'un emplacement sur les voies publiques ou privées.

Un inconvénient commun aux différents cas de figure précités, donc propre à toutes les bornes escamotables, est celui de représenter un danger du fait de leur relief par rapport au sol constituant un obstacle, qui plus est de faible hauteur, et donc pas toujours visible par une personne non attentive ou passagèrement distraite.

Bien entendu, cet inconvénient est accentué la nuit dans des endroits peu ou mal éclairés ou bien encore en cas de mauvaises conditions climatiques et cela même de jour.

Un autre inconvénient est apparu dans les bornes commandées en 30 manoeuvre par l'intermédiaire de moyens pneumatiques ou électriques ou hydrauliques autorisant leur commande à distance.

En effet, dans ce dernier cas, la sortie inattendue d'une borne de son logement, vers sa position de service, peut constituer un danger pour une personne inattentive et donc surprise.

Pour des questions de sécurité, il s'est donc avéré nécessaire de signaler la présence de ces bornes, tant au cours de leur mise en service, que dans leur position fixe de service.

Plus encore, ces bornes trouvent une application sur les places réservées de stationnement ou sur les zones d'activités temporaires ou saisonnières. Il s'agit par exemple des places de marchés, d'espaces réservés aux fêtes foraines ou fêtes publiques d'une manière générale.

Ce type de manifestations nécessite souvent la mise en oeuvre d'appareillages électriques tels que moteurs, turbines, etc... et de dispositifs d'éclairage.

Il est connu d'alimenter électriquement ces consommateurs par l'intermédiaire de câbles les reliant à des coffrets de distribution souvent éloignés. Dans ce cas, l'installation des câbles est faite soit en les disposant à même le sol jusqu'au dit coffret soit de manière aérienne en se servant de supports de fortune. Dans les deux cas, les câbles représentent un réel danger.

La borne escamotable constitue alors avantageusement un point de distribution électrique qui permet de remédier à ces inconvénients, pour alimenter des consommateurs tels que : moteurs électriques de commande, installations d'éclairage en plein air provisoires, réchauffeurs de moteurs de véhicules automobiles dans les pays froids, éclairages et matériels électroménagers d'une caravane ou d'un bateau à quai dans un port, alimentation d'outillages électriques divers, projecteurs électriques, chargeur de batteries.

Le document DE-C-1.044.921 décrit un appareil semblable à manoeuvre manuelle. Ce type de borne distributrice d'électricité requiert cependant une sécurité d'emploi extrêmement fiable, ce qui n'est pas assuré par la borne connue du document DE-C-1.044.921.

Selon l'invention, on parvient à cette sécurité par une borne selon la partie caractérisante de la revendication 1.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut être réalisée et dans lesquels :
- la figure 1: est une vue schématique d'un circuit de commande à distance d'une borne électrique escamotable suivant l'invention ;
- la figure 2: est une vue en coupe longitudinale partielle d'une borne électrique selon l'invention, en position de repos ;
- la figure 3: est une vue en coupe longitudinale partielle d'une borne selon l'invention, en position de service.

La borne escamotable représentée sur les figures, est une borne à commande automatique à distance.

Cet exemple a été volontairement choisi car il représente le mode de réalisation le plus complexe mais il est évident que l'invention ci-dessous décrite pourra s'appliquer à une borne commandée semi-automatiquement, voire même manuellement, comme bien connue dans l'état de la technique.

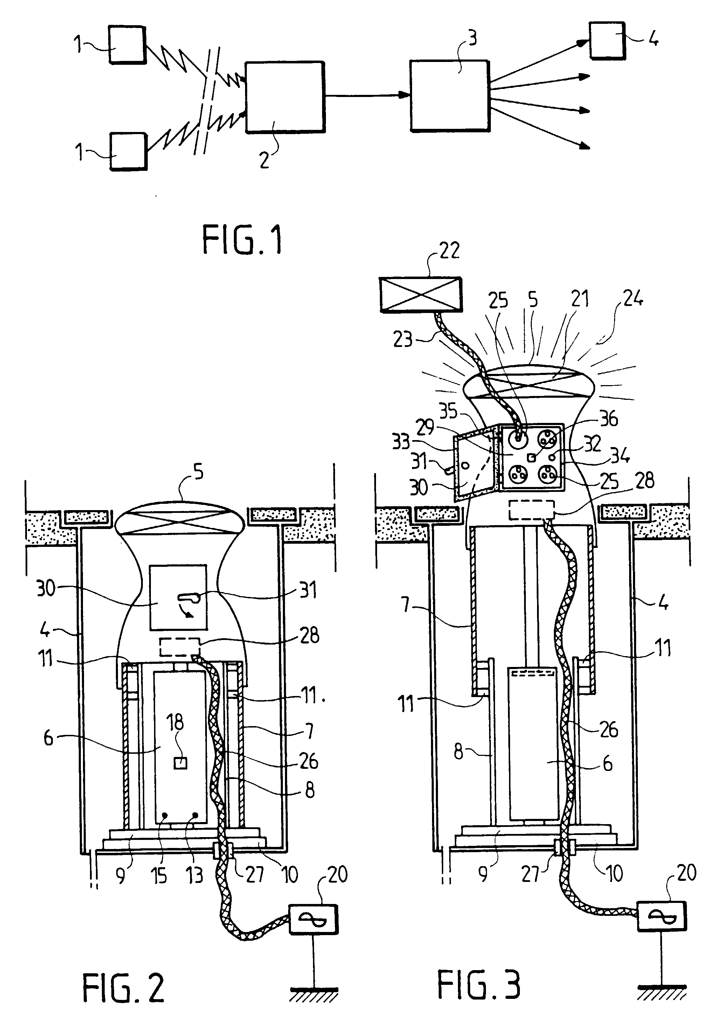

Le dispositif de commande à distance représenté schématiquement sur la figure 1 est constitué par un ou plusieurs organes de commande à distance (1) agissant sur une armoire de commande (2) apte à piloter une centrale technique (3), fournissant un fluide, préférentiellement de l'air comprimé, agissant individuellement ou simultanément sur un ou plusieurs corps de borne (5) disposés dans des caissons correspondants (4).

Le corps de borne (5) est susceptible d'être actionné en commande de levée ou de descente par un vérin (6). Cette borne (5) est solidaire d'un fût femelle (7) coulissant sur un fût mâle (8). Celui-ci est solidaire d'un support (9) monté sur des blocs (10) en élastomère.

Des bagues de guidage (11) sont disposées entre le fût mâle (8) et le fût femelle (7). De plus, des rails de guidage assurent la précision du mouvement télescopique du corps de borne (5).

En fonctionnemment, deux restricteurs de passage de fluide réglables (13) et (15), permettent d'augmenter ou de diminuer le débit du fluide avec pour conséquence une accélération ou une diminution de la vitesse de déplacement du vérin (6).

Egalement, un mécanisme à télérupteur-inverseur (18) sert à ouvrir ou fermer l'arrivée du fluide sous pression dans la chambre basse du vérin (6) actionnant le corps de borne (5).

Pour d'autres détails techniques de réalisation du dispositif de commande, on se reportera à la description de la demande de brevet FR-A-2 596 782 à laquelle il est déjà fait référence ci-dessus.

Il en est de même en ce qui concerne le principe de fonctionnement également connu par la demande précitée.

Rappelons simplement que la commande à distance peut s'effectuer par tous moyens tels qu'émetteur radio-multicanaux, émetteur ultrasons, lecteur de cartes magnétiques, contact à clé, clavier numérique, boucle magnétique avec ou sans identification des véhicules, barrage du type à cellule photo-électrique ou par infrarouges.

Selon l'invention, le corps de la borne mobile (5) constitue un point de distribution électrique intégrée, alimenté par une source de courant électrique alternatif ou continu (20) pour assurer le fonctionnement d'au moins un consommateur (21) disposé sur ledit corps de borne (5) ou (22) relié à celui-ci par un câble de courte longueur (23).

En l'occurence, le consommateur électrique est un dispositif de sécurité disposé sur le corps de borne mobile et permettant sa signalisation au cours de son déplacement et/ou en position de service.

En fait, ce dispositif de sécurité (21) renferme des moyens de signalisation optiques, consistant en une émission de signaux lumineux alternatifs (24), dits "clignotants".

Ces signaux lumineux (24) pourront être directifs selon une direction choisie ou bien, comme représenté sur les figures, être omnidirectionnels. Dans ce cas, on peut imaginer l'insertion dans la borne d'une bande translucide étanche laissant passer la lumière entourant ladite borne à proximité de son sommet. Bien entendu, ce mode de réalisation n'est pas limitatif.

Selon des caractéristiques de fonctionnement préféré, la signalisation lumineuse du corps de borne (5) s'effectue par une émission de lumière permanente en position de service et par une émission de signaux lumineux alternatifs dits "clignotants" au cours de son déplacement, surtout vers une position de service.

Bien entendu, d'autres applications peuvent être envisagées comme, par exemple, le balisage des aéroports conduisant à utiliser des moyens de signalisation optiques qui consistent en une émission de signaux lumineux alternatifs dits "clignotants" et/ou en une émission de signaux lumineux continus selon des cycles de fonctionnement prédéterminés pour chaque type d'émission de signaux.

La borne escamotable dont il est ici question comporte une commande automatique à distance mais il est évident que la commande pourra être semi-automatique ou même manuelle.

Comme représenté également sur les figures (2) et (3), le corps de borne (5) comporte en outre une série de prises de courant (25) reliées à la terre, par l'intermédiaire desquelles un consommateur extérieur (22) peut être relié à la source de courant (20).

La liaison entre le consommateur externe (22) avec la prise de courant (25) s'effectue grâce au câble de courte longueur (23) et une fiche correspondant à la prise (25).

D'autre part, la liaison entre les dites prises (25) et la source (20) s'effectue par l'intermédiaire d'un câble (26) de longueur suffisante pour suivre les mouvements de la borne (5) sans risque d'arrachement. Le passage du câble (26) à travers la paroi de fond du logement (4) s'effectue par l'intermédiaire d'un passe-câble étanche (27).

A signaler également que des moyens de protection électriques (28), tels qu'un disjoncteur différentiel par exemple, sont interposés entre les prises (25) et la source (20) et disposés dans la borne même.

Les prises de courant (25) sont ici au nombre de quatre, mais bien sûr ce nombre peut être variable.

A signaler également que selon l'exemple représenté, les prises de courant (25) sont disposées selon une direction donnée mais on peut très bien concevoir une borne parallélépipédique, ou cylindrique, ou triangulaire, comportant plusieurs faces dont chacune d'elles peut être équipée d'une ou plusieurs prises (25), sans sortir de l'invention.

Quel que soit le cas de figure retenu, les prises de courant (25) sont disposées dans un logement étanche (29) ménagé dans le corps de borne (5) et rendues accessibles, lorsque celle-ci est en position de service, par l'intermédiaire d'une porte verrouillable (30) comportant une poignée de fermeture (31) coopérant avec une serrure (32), et comportant également des moyens de fermeture étanches.

Ces moyens de fermeture étanches sont constitués par un joint en élastomère compressible (33) disposé périphériquement à l'intérieur de la porte (30) et destiné à coopérer par écrasement avec un plan de joint usiné correspondant (34), du logement (29) ainsi rendu étanche lorsque la porte (30) est fermée, que la borne soit en position de repos dans le sol ou en position de service hors sol.

Préférentiellement, la porte (30) est articulée grâce à des charnières (35) disposant d'un jeu frontal de manière à répartir uniformément le serrage lors de sa fermeture et parfaire ainsi l'étanchéité.

La borne ci-dessus décrite comporte en outre des moyens d'interdiction d'escamotage dans son logement (4) lorsqu'elle est en position de service ou lorsqu'au moins une porte (30) d'un logement étanche (29) renfermant au moins une prise (25), est en position ouverte.

Pour réaliser cette fonction, un micro-contact (36) est actionné lors de l'ouverture de la porte (30).

De telles bornes peuvent bien entendu être utilisées de manière isolée ou en groupe. Dans ce cas, elles pourront être reliées électriquement entre elles selon toutes les combinaisons possibles.

Dans le cas d'une commande manuelle, la borne comportera un système de verrouillage, connu en soi, accessible à l'aide d'une clé détenue par une personne habilitée.

Dans tous les cas de figure, la structure mécanique de l'ensemble est conçue de telle sorte à résister au passage d'un poids lourd lorsque la borne est escamotée et à résister à des chocs provenant de véhicules roulant à faible allure.

il est bien entendu que les moyens de signalisation optiques peuvent être remplacés par des moyens de signalisation électriques.

## Revendications

1. Borne escamotable, notamment de voirie, comportant un corps de borne mobile (5) apte à se déplacer dans un logement ménagé dans un caisson (4), ouvert à son extrémité supérieure, entre une position de service dans laquelle ledit corps (5) s'étend au-dessus du niveau de l'extrémité ouverte du caisson (4) et une position de repos dans laquelle ledit corps (5) s'étend par son sommet sensiblement au niveau de l'extrémité ouverte du caisson (4), le corps de borne mobile (5) constituant un point de distribution électrique alimenté par une source de courant (20) comprenant au moins une prise de courant (25) par l'intermédiaire de laquelle un consommateur extérieur (22) peut être relié à la source de courant électrique (20) lorsque ladite borne est en position de service, caractérisée en ce que la/les prise(s) électriques(s) (25) est/sont disposée(s) dans au moins un logement étanche (29) ménagé dans le corps de borne (5) et rendue(s) accessible(s) par l'intermédiaire d'une porte verrouillable (30) comportant également des moyens de fermeture étanches.

2. Borne selon la revendication 1, caractérisée en ce qu'elle comporte un dispositif de sécurité (21) raccordé à la source de courant (20) disposé sur le corps de borne mobile (5) et permettant sa signalisation au cours de son déplacement et/ou en position de service.

3. Borne selon la revendication 2, caractérisée en ce que le dispositif de sécurité (21) comporte des moyens de signalisation optiques.

4. Borne selon la revendication 3, caractérisée en ce que les moyens de signalisation optiques consistent en une émission de signaux lumineux alternatifs (24) dits "clignotants" et/ou une émission de signaux lumineux continus selon des cycles de fonctionnement prédéterminés pour chaque type d'émission de signaux.

5. Borne selon l'une des revendications 2 à 4, caractérisée en ce que la signalisation s'effectue par une émission de lumière permanente en position de service et par une émission de signaux lumineux alternatifs (24) dits "clignotants" au cours de son déplacement.

6. Borne selon la revendication 1, caractérisée en ce qu'elle comporte des moyens d'interdiction d'escamotage dans son logement lorsqu'au moins une porte (30) d'un logement étanche (29) renfermant au moins une prise (25), est en position ouverte.

7. Borne selon la revendication 1 ou la revendication 6, caractérisée en ce que la/les porte(s) du/des logement(s) étanche(s) (29) renfermant la/les prise(s) (25) est/sont articulée(s) par l'intermédiaire de charnières(35) disposant d'un jeu frontal de manière à répartir uniformément le serrage lors de la fermeture de la/les porte(s) (30).

## Patentansprüche

1. Versenkbarer Pfosten, insbesondere Poller, mit einem beweglichen Pfostenkörper (5), der sich in einer Aufnahme, die in einem an seinem oberen Ende geöffneten Kasten (4) ausgebildet ist, zwischen einer Betriebsstellung, in welcher sich der Körper (5) oberhalb des Niveaus des geöffneten Endes des Kastens (4) erstreckt, und einer Ruhestellung verstellen kann, in welcher sich der obere Abschnitt des Körpers (5) im wesentlichen auf dem Niveau des geöffneten Endes des Kastens (4) erstreckt, wobei der bewegliche Pfostenkörper (5) eine elektrische Verteilstelle bildet, die von einer Stromquelle (20) versorgt wird, die wenigstens einen Anschluß (25) aufweist, über den ein externer Verbraucher (22) mit der elektrischen Stromquelle (20) verbunden werden kann, wenn sich der Pfosten in der Betriebsstellung befindet, dadurch gekennzeichnet, daß der elektrische Anschluß (25) bzw. die elektrischen Anschlüsse in wenigstens einer dichten Aufnahme (29) angeordnet ist bzw. sind, die in dem Pfostenkörper (5) ausgebildet sind und über eine verriegelbare Tür (30) zugänglich ist bzw. sind, welche ebenfalls Mittel zum dichten Verschließen aufweist.

2. Pfosten nach Anspruch 1, dadurch gekennzeichnet, daß er eine Sicherheitsvorrichtung (21) aufweist, die mit der Stromquelle (20) verbunden und an dem Körper (5) des beweglichen Pfostens angeordnet ist und ermöglicht, diesen im Verlauf seiner Verstellung und/oder in der Betriebsstellung zu signalisieren.

3. Pfosten nach Anspruch 2, dadurch gekennzeichnet, daß die Sicherheitsvorrichtung (21) Mittel zur optischen Signalisierung aufweist.

4. Pfosten nach Anspruch 3, dadurch gekennzeichnet, daß die Mittel zur optischen Signalisierung in der Abgabe von abwechselnden Lichtsignalen (24), die "Blinklicht" genannt werden, und/oder in der Abgabe von kontinuierlichen Lichtsignalen gemäß Betriebszyklen bestehen, die für jeden Typ von Signalabgabe vorbestimmt sind.

5. Pfosten nach einem der Ansprüche 2 bis 4, dadurch gekennzeichnet, daß die Signalisierung durch eine permanente Lichtabgabe in der Betriebsstellung und durch eine Abgabe von abwechselnden Lichtsignalen (24), die "Blinklicht" genannt werden, im Verlauf seiner Verstellung erfolgt.

6. Pfosten nach Anspruch 1, dadurch gekennzeichnet, daß er Mittel aufweist, um ein Versenken in seine Aufnahme zu verhindern, wenn sich wenigstens eine Tür (30) einer dichten Aufnahme (29), die wenigstens einen Anschluß (25) umgibt, in der geöffneten Stellung befindet.

7. Pfosten nach Anspruch 1 oder nach Anspruch 6, dadurch gekennzeichnet, daß die Tür bzw. die Türen der Aufnahme (29) bzw. der Aufnahmen, welche den Anschluß (25) bzw. die Anschlüsse umschließt bzw. umschließen, über Scharniere (25) angelenkt ist bzw. sind, die ein frontales Spiel aufweisen, so daß beim Schließen der Tür (30) bzw. der Türen die Spannwirkung gleichmäßig verteilt wird.

## Claims

1. A retractable bollard, particularly one used on roads, comprising a movable bollard body (5) capable of being displaced inside a housing made in a chamber (4), open at its upper end, between an operating position in which said body (5) extends above the level of the open end of the chamber (4) and a rest position in which said body (5) extends with its tip substantially level with the open end of the chamber (4), the movable bollard body (5) constituting an electrical distribution point supplied by a power source (20) comprising at least one power socket (25) via which an external consumer (22) can be connected to the electric power source (20) when said bollard is in the operating position, characterised in that the electric socket(s) (25) is/are arranged in at least one watertight housing (29) provided on the body of the bollard (5) and made accessible via a lockable door (30) also comprising watertight closing means.

2. A bollard according to Claim 1, characterised in that it comprises a safety device (21) connected to the power source (20) arranged on the movable bollard body (5) and allowing it to transmit signals during its displacement and/or when in the operating position.

3. A bollard according to Claim 2, characterised in that the safety device (21) comprises optical signalling means.

4. A bollard according to Claim 3, characterised in that the optical signalling means consist of a transmission of alternating light signals (24) known as "flashing lights" and/or a transmission of continuous light signals according to predetermined operating cycles for each type of signal transmission.

5. A bollard according to one of Claims 2 to 4, characterised in that the signalling is performed by a steady transmission of light in the operating position and by a transmission of alternating light signals (24) known as "flashing lights" during its displacement.

6. A bollard according to Claim 1, characterised in that it comprises means for preventing retraction into its housing when at least one door (30) of a watertight housing (29) enclosing at least one socket (25) is in the open position.

7. A bollard according to Claim 1 or Claim 6, characterised in that the door(s) of the watertight housing(s) enclosing the socket(s) (25) is/are articulated via hinges (35) having play at the front so as to distribute uniformly the clamping effect when the door(s) is/are closed (30).
